# EUROPEAN PATENT SPECIFICATION

(11) **EP 4 563 549 B1**
(45) Date of publication and mention of the grant of the patent: **18.02.2026**
(21) Application number: 24202438.8
(22) Date of filing: 25.09.2024
(51) Int. Cl.: B29C 70/38, C04B 35/80, C04B 35/117, C04B 35/18, C04B 35/185, C04B 35/488, C04B 35/52, C04B 35/565, C04B 35/581, C04B 35/584, C04B 35/587

(54) **AUTOMATED SYSTEMS AND METHODS FOR MANUFACTURING CERAMIC MATRIX COMPOSITES**
AUTOMATISIERTE SYSTEME UND VERFAHREN ZUR HERSTELLUNG VON KERAMIKMATRIXVERBUNDSTOFFEN
SYSTÈMES ET PROCÉDÉS AUTOMATISÉS DE FABRICATION DE COMPOSITES À MATRICE CÉRAMIQUE

(30) Priority: 29.11.2023 US 202363603977 P; 22.01.2024 NL 2036860
(43) Date of publication of application: 04.06.2025
(73) Proprietor: The Boeing Company, Arlington, VA 22202 (US)
(72) Inventor: Smith, Brian J., ARLINGTON, 22202 (US); Zgherea, Lisa C., ARLINGTON, 22202 (US); Johnson, Brice A., ARLINGTON, 22202 (US); Heng, Sangvavann, ARLINGTON, 22202 (US); Brown, Christopher R., ARLINGTON, 22202 (US); Fritzke, Ricardo A., ARLINGTON, 22202 (US); Wienhold, Erik N., ARLINGTON, 22202 (US)
(74) Representative: Arnold & Siedsma

(56) References cited:
- WO-A1-2020/081348
- US-A1- 2017 320 785

## Description

The present disclosure relates generally to composite manufacturing and, more particularly, to systems and methods for a fully automated pick, peel, place, form, compact, and inspect process used during the manufacture of ceramic matrix composite materials.

Ceramic matrix composites have different tack and texture than polymer matrix composites and, therefore, require different methods of processing. Ceramic fibers of ceramic matrix composites are more brittle and stiffer than carbon fibers of polymer matrix composites. More brittle and stiffer fibers along with different organic tackifier constituent resin of the ceramic fibers require different methods of processing during manufacture of ceramic matrix composite structures.

The abstract of WO 2020/081348 A1 states: "A system and method for separating a layer from a layer assembly when the layer assembly includes a backing layer and a material layer. The system includes an automated machine having a controller and an end effector. A separating tool is attached to the end effector of the automated machine. The separating tool includes a displacing member, with an outer face, configured to establish a void between the backing layer and the material layer by displacing a portion of the backing layer. The separating layer also includes a securing member configured to establish a mechanical connection with a displaced portion of the backing layer."

A typical ceramic matrix composite structure is manufactured using a hand-layup process. A drawback in using a hand-layup process to manufacture a ceramic matrix composite structure is variability of quality and consistency of the ceramic matrix composite structure. As such, manual inspection and rework are often required. Another drawback is that the hand-layup process is time-intensive and requires skilled technicians. The overall result is increased cycle time as well as increased labor costs to manufacture the ceramic matrix composite structure.

Accordingly, those skilled in the art continue with research and development efforts in ceramic matrix composite manufacturing.

Disclosed are examples of a method for cleaning a ceramic matrix from a compaction roller and a system for compacting a ceramic composite material. The following is a non-exhaustive list of examples, which may or may not be claimed, of the subject matter according to the present disclosure.

In an example, the disclosed method includes steps of: (1) picking up a ply of a ceramic matrix composite material at a staging location; (2) removing a bottom backing layer from the ply at a backing-removal location; (3) placing the ply on a forming surface at a forming location after removing the bottom backing layer; (4) compacting the ply on the forming surface; (5) removing a top backing layer from the ply after compacting the ply on the forming surface; and (6) inspecting the ply after compacting the ply on the forming surface.

In an example, the disclosed system includes a pick and place apparatus, a peeling apparatus, and an inspecting apparatus. The pick and place apparatus configured to pick up a ply of a ceramic matrix composite material at a staging location. The pick and place apparatus is also configured to place the ply on a forming surface at a forming location. The pick and place apparatus is further configured to compact the ply on the forming surface. The peeling apparatus is configured to remove a bottom backing layer from the ply at a backing-removal location before the ply is placed on the forming surface. The peeling apparatus is also configured to remove a top backing layer from the ply after the ply is compacted on the forming surface. The inspecting apparatus is configured to inspect the ply after the ply is compacted on the forming surface 160.

Also disclosed are examples of a portion of an aircraft manufactured according to the method and/or utilizing the system.

Further disclosed are examples of a ceramic matrix composite structure manufactured according to the method or utilizing the system. Preferably, such ceramic matrix composite structure relates to a portion of an aircraft. A further aspect of the present discloses relates to an aircraft comprising such ceramic matrix composite structure.

Other examples of the system and the method will become apparent from the following detailed description, the accompanying drawings, and the appended claims.
Fig. 1 is a flow diagram of an example of a method for manufacturing a ceramic matrix composite structure;
Fig. 2 is a flow diagram of an example of a step of picking up a ply of ceramic matrix composite material, according to the method of Fig. 1;
Fig. 3 is a flow diagram of an example of a step of removing a bottom backing layer from the ply of ceramic matrix composite material, according to the method of Fig. 1;
Fig. 4 is a flow diagram of an example of a step of placing the ply of ceramic matrix composite material on a forming surface, according to the method of Fig. 1;
Fig. 5 is a flow diagram of an example of a step of compacting the ply of ceramic matrix composite material on the forming surface, according to the method of Fig. 1;
Fig. 6 is a flow diagram of an example of a step of removing a top backing layer from the ply of ceramic matrix composite material, according to the method of Fig. 1;
Fig. 7 is a flow diagram of an example of a step of inspecting the ply of ceramic matrix composite material on the forming surface, according to the method of Fig. 1;
Fig. 8 is a schematic block diagram of an example of a system for manufacturing a ceramic matrix composite structure;
Fig. 9 is a flow diagram of an example of an aircraft manufacturing and service method; and
Fig. 10 is a schematic block diagram of an example of an aircraft.

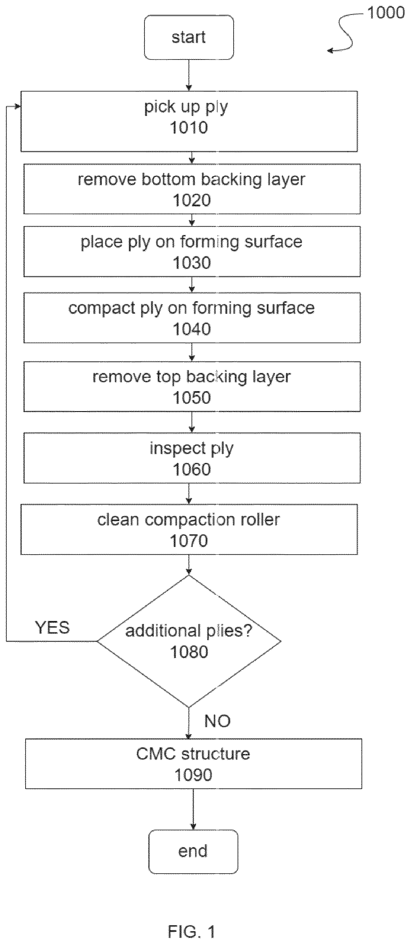

Referring generally to Figs. 1-8, by way of examples, the present disclosure is directed to a method 1000 and a system 100 for manufacturing ceramic matrix composite (CMC) structures. Examples of the method 1000 and the system 100 disclosed herein enable an automated and integrated Pick and Place (PnP) process, forming and compaction process, and inspection and re-work process for various ceramic matrix composite materials. While examples of the method 1000 and the system 100 provide particular advantages and benefits related to manufacturing ceramic matrix composite structures, one or more portions of the method 1000 and/or the system 100 can also be used in manufacturing other polymer and non-polymer composite structures.

The specific construction of the ceramic matrix composite structures and methods for manufacture thereof and the industry in which the structures and methods are implemented may vary. By way of example, the disclosure describes ceramic matrix composite structures and methods for manufacturing at least a portion of an aircraft. The ceramic matrix composite structures and methods for manufacture thereof may be implemented by an original equipment manufacturer (OEM) in compliance with commercial, military, and space regulations. It is conceivable that the disclosed ceramic matrix composite structures and methods for manufacture thereof may be implemented in many other ceramic matrix composite manufacturing industries.

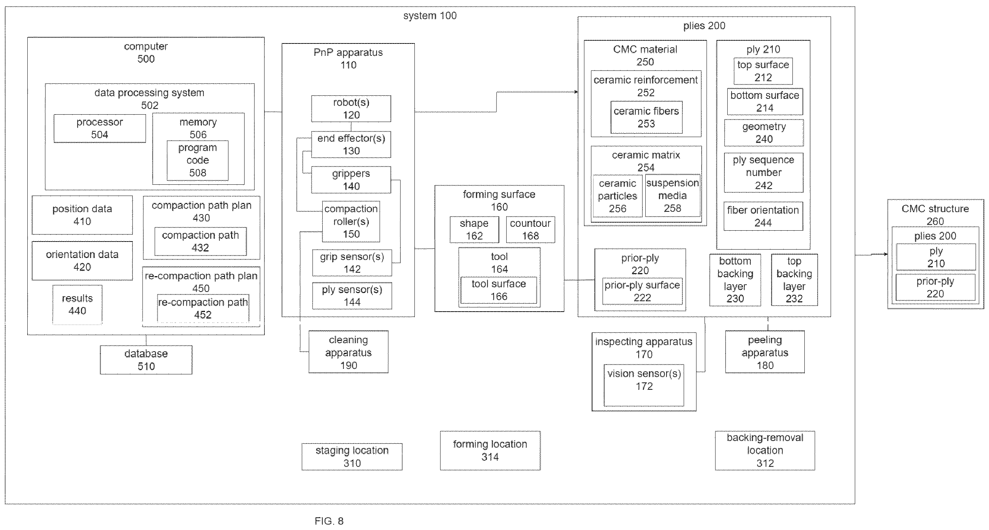

Referring initially to Fig. 8, ceramic matrix composites (CMCs) are a subgroup of composite materials and a subgroup of ceramics. Ceramic matrix composites include a ceramic reinforcement 252 embedded in a ceramic matrix 254. Both the ceramic reinforcement 252 and the ceramic matrix 254 can include any ceramic material, including carbon and carbon fibers. In one or more examples, a ceramic matrix composite material 250 is a ceramic composite and includes the ceramic reinforcement 252 and the ceramic matrix 254.

In one or more examples, the ceramic reinforcement 252 is pre-impregnated with the ceramic matrix 254. In such examples, a ply 210, such as any one of a plurality of plies 200, of the ceramic matrix composite material 250 can also be referred to as a ceramic matrix composite prepreg.

In one or more examples, the ceramic reinforcement 252 includes ceramic fibers 253, such as at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers. Other suitable reinforcement materials are also contemplated for use as the ceramic reinforcement 252.

In one or more examples, the ceramic matrix 254 includes at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix. Other suitable matrix materials are also contemplated for use as the ceramic matrix 254.

In one or more examples, the ceramic matrix 254 includes ceramic particles 256 dispersed in a suspension media 258 (e.g., fluid or other vehicle). In one or more examples, the ceramic matrix 254 is an aqueous suspension (e.g., the suspension media 258 includes an aqueous media). In one or more examples, the ceramic matrix 254 is a non-aqueous suspension (e.g., the suspension media 258 includes a non-aqueous media). The ceramic matrix 254 has various viscosities depending on the suspension media 258 used. In one or more examples, the ceramic particles 256 include at least one of carbon particles, silicon carbide particles, alumina particles, alumina silica particles, aluminum nitride particles, silicon nitride particles, mullite particles, geo-polymer particles, and zirconia particles. Other suitable materials are also contemplated for use as the ceramic particles 256.

The present disclosure recognizes that ceramic matrix composites have different tack and texture than polymer matrix composites (PMC). As an example, the fiber reinforcement material (e.g., ceramic reinforcement 252) of a fabric-based ceramic matrix composite is more brittle and stiffer than the fiber reinforcement material of a fabric-based polymer matrix composite (PMC). As another example, the matrix material (e.g., ceramic matrix 254) of a fabric-based ceramic matrix composite is less viscous and has different tack characteristics than the matrix material of a fabric-based polymer matrix composite. As such, traditional manufacturing techniques and tools used for polymer matrix composites are not suitable for use with ceramic matrix composites and ceramic matrix composites require different methods and systems for processing.

In one or more examples, the method 1000 and the system 100 disclosed herein provide a fully automated process from programming to final inspection specifically designed for the material requirements of ceramic matrix composite layups. A fully automated process for picking, peeling, placing, forming, compacting, inspecting, and re-compacting (as needed) of ceramic matrix composites offers improved quality and repeatability, reduced cycle time, and reduced touch time. In various examples, the automated operations and processes enabled by the method 1000 and the system 100 includes automated robotic path planning, ply pick up, ply inspection, bottom film peel, ply placement, rollout compaction, top film peel, ply inspection, re-work compaction, and final ply inspection.

The present disclosure recognizes that a robotic PnP layup process for fabric-based ceramic matrix composites (e.g., CMC prepregs) requires controlled placement of the ply 210 of the ceramic matrix composite material 250 on a forming surface 160 and specialized compaction after placement to remove air pockets and wrinkles and to conform the ply 210 to the shape or contour of a layup tool before each subsequent ply is placed. As such, examples of the method 1000 and the system 100 include unique tools for automated picking, placing, and compacting the ply 210, automated removal of backing films, automated and adaptive compaction path planning, automated ply alignment using state-of-the art vision systems, in-situ inspection and automated generation of rework paths, if necessary, and automated inspection of ply location and ply orientation.

Fig. 1 illustrates an example of the method 1000 for manufacturing the ceramic matrix composite structure 260. Fig. 8 illustrates an example of the system 100 for manufacturing the ceramic matrix composite structure 260. The following are examples of the method 1000 (Fig. 1), according to the present disclosure. In one or more examples, the method 1000 is implemented using the system 100 (e.g., Figs. 8). The method 1000 includes a number of elements, steps, and/or operations. Not all of the elements, steps, and/or operations described or illustrated in one example are required in that example. Some or all of the elements, steps, and/or operations described or illustrated in one example can be combined with other examples in various ways without the need to include other elements, steps, and/or operations described in those other examples, even though such combination or combinations are not explicitly described or illustrated by example herein.

Referring to Fig. 8, as will be described in more detail herein, in various examples, the system 100 includes a number of operational components, including one or more of a pick-and-place (PnP) apparatus 110, a peeling apparatus 180, an inspecting apparatus 170, a cleaning apparatus 190, and a tool 164. In various examples, the PnP apparatus 110 includes a number of operational components, including one or more of at least one robot 120, at least one end effector 130, a plurality of grippers 140, at least one grip sensor 142, at least one ply sensor 144, at least one compaction roller 150. In various examples, the inspecting apparatus 170 includes a number of operational components, including at least one vision sensor 172.

Referring particularly to Fig. 1 and generally to Fig. 8, in one or more examples, one or more steps of the method 1000 is electronically controlled or computer controlled (e.g., under the direction of or by instructions from a computer 500). In these examples, the system 100 also includes a computer 500 that is adapted (e.g., configured or programmed) to instruct or direct one or more of the operational components of the system 100 to perform one or more of the operational steps implemented by the method 1000. As such, in one or more examples, the method 1000 is an electronically-controller method or a computer-implemented method.

Referring to Figs. 1 and 8, in one or more examples, the method 1000 includes a step of (block 1010) picking up the ply 210 of the ceramic matrix composite material 250 at a staging location 310. In one or more examples, the step of (block 1010) picking up the ply 210 is performed using the PnP apparatus 110 of the system 100. In one or more examples, picking up the ply 210 is performed automatically, for example, under direction from the computer 500. For example, the PnP apparatus 110 is programmed to automatically pick up the ply 210 at the staging location 310.

Referring to Fig. 8, in one or more examples, the PnP apparatus 110 includes at least one of the robot 120 and the end effector 130. In one or more examples, the robot 120 is any suitable type of programmable and articulating platform that is configured to selectively or controllably move the end effector 130 in three-dimensional space, such as a robotic arm, an overhead gantry, and the like. The end effector 130 is coupled to a working end of the robot 120. The end effector 130 is configured or adapted to interact with the ply 210 during the PnP process. In one or more examples, the end effector 130 includes or takes the form of any suitable gripper end effector for picking and placing a sheet (e.g., the ply 210) of the ceramic matrix composite material 250 on the forming surface 160. In one or more examples, the end effector 130 includes one or more tools, sensors, mechanisms, or devices to perform one or more operations on the ply 210.

Referring to Fig. 8, in one or more examples, the PnP apparatus 110 also includes the plurality of grippers 140. In one or more examples, the grippers 140 are coupled to or are otherwise integrated with the end effector 130. In one or more examples, the grippers 140 are configured to be removably or releasably coupled to a surface of the ply 210 during the PnP process. In one or more examples, one or more of the grippers 140 are vacuum grippers. In these examples, the grippers 140 utilize suction generated by a vacuum source to grip the surface of the ply 210. In one or more examples, one or more of the grippers 140 are electrostatic grippers. In these examples, the grippers 140 utilize electrostatic adhesion to grip the surface of the ply 210.

In one or more examples, each one of the plies 200 (e.g., ply 210) that is processed to provide the ceramic matrix composite structure 260 is sandwiched between a bottom backing layer 230 (e.g., a bottom backing film) and a top backing layer 232 (e.g., top backing film). Each one of the plies 200 (e.g., ply 210) has a geometry 240, a ply sequence number 242, and a fiber orientation 244. In one or more examples, the method 1000 includes a process for automated removal of the bottom backing layer 230 and the top backing layer 232.

Referring again to Figs. 1 and 8, in one or more examples, the method 1000 includes a step of (block 1020) removing the bottom backing layer 230 from the ply 210 at a backing-removal location 312. In one or more examples, the step of (block 1020) removing the bottom backing layer 230 from the ply 210 is performed using the peeling apparatus 180 of the system 100. In one or more examples, removing the bottom backing layer 230 from the ply 210 is preformed automatically, for example, under direction from the computer 500. For example, the peeling apparatus 180 is programed to automatically remove the bottom backing layer 230 from the ply 210 at the backing-removal location 312.

In one or more examples, the ply 210 is moved from the staging location 310 to the backing-removal location 312 using the PnP apparatus 110. For example, with the ply 210 coupled to the grippers 140 of the end effector 130, the robot 120 moves the end effector 130 and the ply 210 from the staging location 310 to the backing-removal location 312, for example, under direction from the computer 500.

Referring to Figs. 1 and 8, in one or more examples, the method 1000 includes a step of (block 1030) placing the ply 210 on the forming surface 160 at a forming location 314 after removing the bottom backing layer 230. In one or more examples, the step of (block 1030) placing the ply 210 on the forming surface 160 is performed using the PnP apparatus 110. In one or more examples, placing the ply 210 is performed automatically, for example, under direction from the computer 500. For example, the PnP apparatus 110 is programmed to automatically place the ply 210 at a desired or appropriate position on the forming surface 160. In one or more examples, the ply 210 is moved from the staging location 310, or the backing-removal location 312 in examples where the bottom backing layer 230 is removed, to the forming location 314 using the PnP apparatus 110. For example, with the ply 210 coupled to the grippers 140 of the end effector 130, the robot 120 moves the end effector 130 and the ply 210 from the staging location 310, or the backing-removal location 312, to the forming location 314, for example, under direction from the computer 500.

Referring still to Figs. 1 and 8, in one or more examples, the method 1000 includes a step of (block 1040) compacting the ply 210 on the forming surface 160 after placing the ply 210 on the end effector 130. In one or more examples, the step of (block 1040) compacting the ply 210 on the forming surface 160 is performed using the PnP apparatus 110. In one or more examples, compacting the ply 210 is performed automatically, for example, under direction from the computer 500. For example, the PnP apparatus **110** is programmed to automatically compact the ply 210 according to a compaction path plan 430.

Referring to Fig. 8, in one or more examples, the PnP apparatus 110 includes the compaction roller 150. In one or more examples, the compaction roller 150 is coupled to or is otherwise integrated with the end effector 130. In one or more examples, the compaction roller 150 is configured to apply a compaction force to the ply 210, thereby compressing and compacting the ply 210 against the forming surface 160 and conforming the ply 210 to a shape 162 of the forming surface 160.

In one or more examples, the PnP apparatus 110 includes more than one instance of the robot 120 and/or more than one instance of the end effector 130. In one or more examples, the grippers 140 and the compaction roller 150 share a single instance of the end effector 130 (e.g., the same end effector). In one or more examples, the grippers 140 and the compaction roller 150 each have a dedicated instance of the end effector 130 (e.g., different end effectors).

Referring again to Figs. 1 and 8, in one or more examples, the method 1000 includes a step of (block 1050) removing a top backing layer 232 from the ply 210 after compacting the ply 210 on the forming surface 160. In one or more examples, the step of (block 1050) removing the top backing layer 232 from the ply 210 is performed using the peeling apparatus 180. In one or more examples, removing the top backing layer 232 from the ply 210 is performed automatically, for example, under direction from the computer 500. For example, the peeling apparatus 180 is programmed to automatically remove the top backing layer 232 from the ply 210 at the forming location 314 after the ply 210 is compacted.

Referring to Figs. 1 and 8, in one or more examples, the method 1000 includes a step of (block 1060) inspecting the ply 210 after compacting the ply 210 on the forming surface 160. In one or more examples, the step of (block 1060) is performed using an inspecting apparatus 170. In one or more examples, inspecting the ply 210 is performed automatically, for example, under direction from the computer 500. For example, the inspecting apparatus 170 is programmed to automatically inspect the ply 210 at the forming location 314 after the ply 210 is compacted.

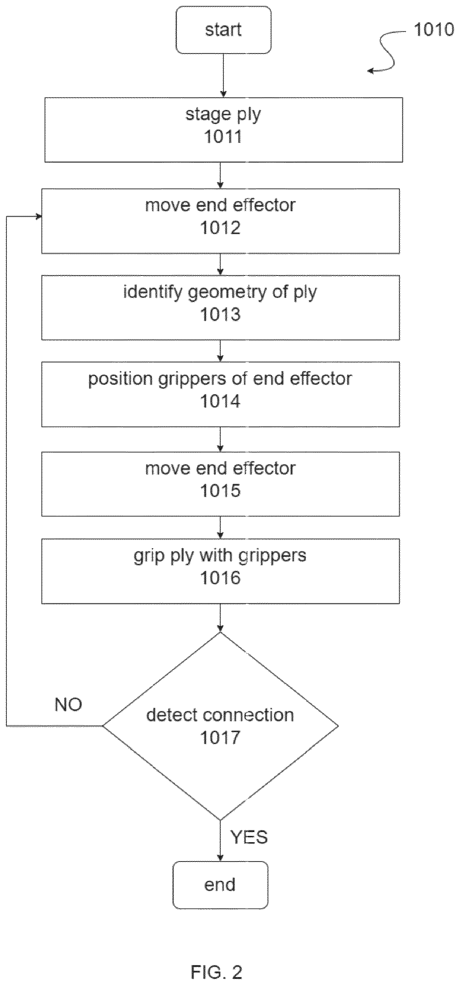

Referring generally to Figs. 1 and 8 and particularly to Fig. 2, which illustrates an example of the step of (block 1010) picking up the ply 210 of the ceramic matrix composite material 250 at the staging location 310, according to one or more examples of the method 1000 (Fig. 1).

In one or more examples, the step of (block 1010) picking up the ply 210 includes a step of moving the robot 120 to a home position, thereby starting the pick-up operation.

Referring to Figs. 2 and 8, in one or more examples, the step of (block 1010) picking up the ply 210 includes a step of (block 1011) staging the ply 210 at the staging location 310. In these examples, the ply 210 is physically staged (e.g., placed in a generally flat configuration) in the staging area for pick up by the end effector 130 of the PnP apparatus 110.

Referring to Figs. 2 and 8, in one or more examples, the step of (block 1010) picking up the ply 210 includes a step of (block 1012) moving the end effector 130 to the staging location 310. In one or more examples, the end effector 130 is moved, for example, using the robot 120, from the home position to a pick-up position relative to a staging area at the staging location 310.

Referring to Figs. 2 and 8, in one or more examples, the step of (block 1010) picking up the ply 210 includes a step of (block 1013) identifying a geometry 240 of the ply 210. In one or more examples, the geometry 240 of the ply 210 is detected and/or identified using the at least one ply sensor 144. In one or more examples, the ply sensor 144 is coupled to or is otherwise integrated with the end effector 130. In one or more examples, the ply sensor 144 includes or takes the form of an imaging device or other suitable vision sensor that is configured or operates to scan the staging area and identify the geometry 240 of the ply 210 based on the scan. As examples, the ply sensor 144 can include or take the form of a camera, a charge coupled device (CCD), a complementary metal oxide semiconductor (CMOS), a laser scanner, and the like.

Referring to Figs. 2 and 8, in one or more examples, the step of (block 1010) picking up the ply 210 includes a step of (block 1014) positioning the grippers 140 of the end effector 130 based on the geometry 240 of the ply 210. In these examples, the grippers 140 are movable relative to the end effector 130 such that the grippers 140 can be selectively and appropriately positioned for gripping the ply 210. In one or more examples, the geometry 240 of each one of the plies 200 being placed to form the ceramic matrix composite structure 260 and the associated positions of the grippers 140 corresponding to the plies 200 are stored in a database 510 and are retrieved from the database 510 by the computer 500. The computer 500 then instructs the grippers 140 to move to the appropriate position for picking up the ply 210.

Referring to Figs. 2 and 8, in one or more examples, the step of (block 1010) picking up the ply 210 includes a step of (block 1015) moving the end effector 130 to place the grippers 140 in contact with the ply 210. In these examples, the end effector 130 is moved, for example, by the robot 120, to a vision corrected position for placing the grippers 140 in contact with the ply 210 for gripping.

Referring to Figs. 2 and 8, in one or more examples, with the grippers 140 in contact with the ply 210, the step of (block 1010) picking up the ply 210 includes a step of (block 1016) gripping 1016 the ply 210 with the grippers 140. In one or more examples, the grippers 140 grip the ply 210 using suction or vacuum. In one or more examples, the grippers 140 grip the ply 210 using electrostatic adhesion.

Referring to Figs. 2 and 8, in one or more examples, the step of (block 1010) picking up the ply 210 includes a step of (block 1017) detecting whether the ply 210 is coupled to the grippers 140. In one or more examples, contact and/or proper grip between the grippers 140 and the ply 210 is detected using the at least one grip sensor 142. In one or more examples, the grip sensor 142 is coupled to or is otherwise integrated with the end effector 130. In one or more examples, the grip sensor 142 includes any suitable type of sensor or device that is configured or operates to detect contact and/or proper grip between the grippers 140 and the ply 210, depending, for example, of the type of grippers used and the grip technique. As examples, the grip sensor 142 can include or take the form of a vacuum sensor, a pressure sensor, contact sensor, a proximity sensor, and the like.

As illustrated in Fig. 2, when a determination of proper contact and/or grip, based on detecting (e.g., block 1017), is affirmative (i.e., contact and/or grip is sufficient), the robot 120 moves the end effector 130 and, thus, the ply 210 held by the end effector 130 to a safe exit position, thereby ending the pick-up operation. However, when the determination of proper contact and/or grip, based on detecting (e.g., block 1017), is negative (i.e., contact and/or grip is insufficient), the process returns to the step of (block 1012) moving the end effector 130 and the subsequent operational steps are repeated until contact and/or grip is determined to be sufficient.

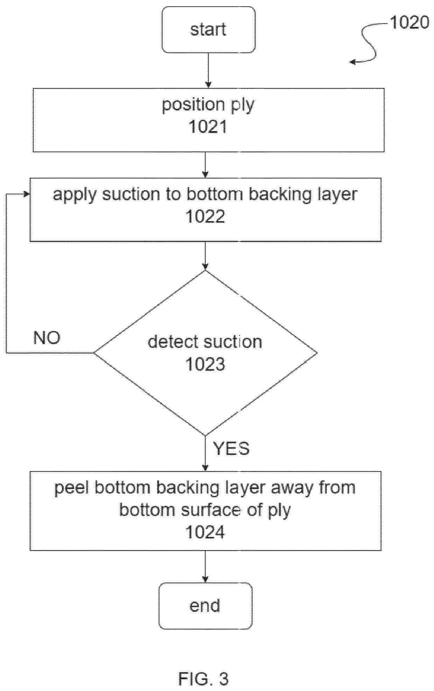

Referring generally to Figs. 1 and 8 and particularly to Fig. 3, which illustrates an example of the step of (block 1020) removing the bottom backing layer 230 from the ply 210 at the backing-removal location 312, according to one or more examples of the method 1000 (Fig. 1).

Referring to Fig. 3 and 8, in one or more examples, the step of (block 1020) removing the bottom backing layer 230 from the ply 210 includes a step of (block 1021) positioning 1021 the ply 210 at the backing-removal location 312 for removal of the bottom backing layer 230.

Referring to Figs. 3 and 8, in one or more examples, the step of (block 1020) removing the bottom backing layer 230 from the ply 210 includes a step of (block 1022) applying 1022 suction to the bottom backing layer 230.

Referring to Figs. 3 and 8, in one or more examples, the step of (block 1020) removing the bottom backing layer 230 from the ply 210 includes a step of (block 1023) detecting 1023 the suction.

Referring to Figs. 3 and 8, in one or more examples, the step of (block 1020) removing the bottom backing layer 230 from the ply 210 includes a step of (block 1024) peeling the bottom backing layer 230 away from a bottom surface 214 of the ply 210.

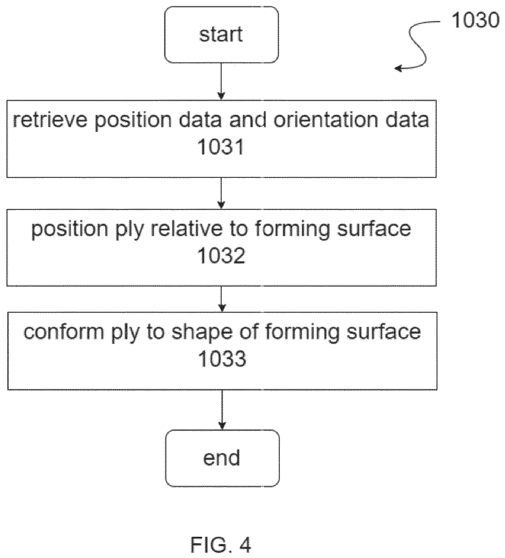

Referring generally to Figs. 1 and 8 and particularly to Fig. 4, which illustrates an example of the step of (block 1030) placing the ply 210 on the forming surface 160, according to one or more examples of the method 1000.

Referring to Figs. 4 and 8, in one or more examples, the step of (block 1030) placing the ply 210 on the forming surface 160 includes a step of (block 1031) retrieving 1031 position data 410 and orientation data 420 based on the geometry 240 of the ply 210 and a ply sequence number 242 of the ply 210.

Referring to Figs. 4 and 8, in one or more examples, the step of (block 1030) placing the ply 210 on the forming surface 160 includes a step of (block 1032) positioning the ply 210 at the forming location 314 relative to the forming surface 160 based on the position data 410 and the orientation data 420.

Referring to Figs. 4 and 8, in one or more examples, the step of (block 1030) placing the ply 210 on the forming surface 160 includes a step of (block 1033) conforming 1033 the ply 210 to the shape 162 of the forming surface 160.

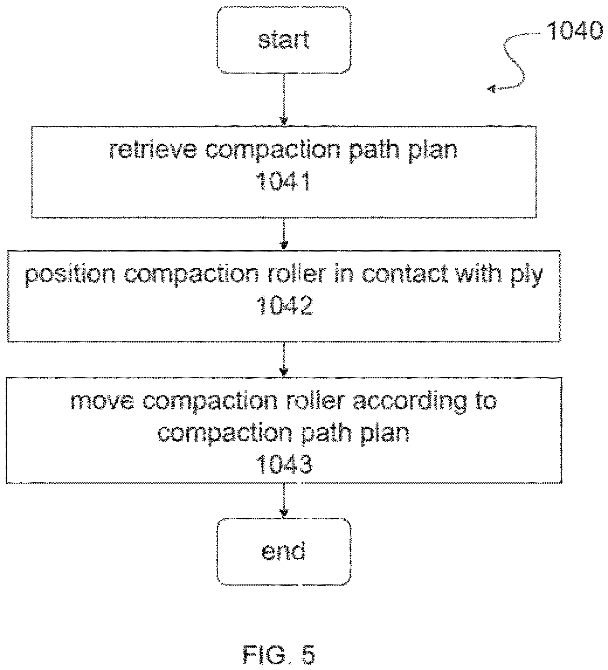

Referring generally to Figs. 1 and 8 and particularly to Fig. 5, which illustrates an example of the step of (block 1040) compacting the ply 210 on the forming surface 160, according to one or more examples of the method 1000.

Referring to Figs. 5 and 8, in one or more examples, the step of (block 1040) compacting the ply 210 on the forming surface 160 includes a step of (block 1041) retrieving a compaction path plan 430 based on the geometry 240 of the ply 210 and the ply sequence number 242 of the ply 210.

Referring to Figs. 5 and 8, in one or more examples, the step of (block 1040) compacting the ply 210 on the forming surface 160 includes a step of (block 1042) positioning 1042 the compaction roller 150 in contact with the ply 210.

Referring to Figs. 5 and 8, in one or more examples, the step of (block 1040) compacting the ply 210 on the forming surface 160 includes a step of (block 1043) moving the compaction roller 150 across the ply 210 along a compaction path 432 according to the compaction path plan 430.

In one or more examples, compacting the ply 210 includes a step of positioning the compaction roller 150 in contact with a ply-surface (e.g., the top backing layer 232 before being removed) of the ply 210 of the ceramic matrix composite material 250. Compacting the ply 210 also includes a step of applying a compaction pressure to the ply 210 using the compaction roller 150 such that the compaction pressure is substantially uniformly distributed on the ply 210. With the compaction roller 150 in contact with the ply 210 and applying the compaction pressure, compacting the ply 210 further includes a step of moving the compaction roller 150 across the ply 210, for example, along the compaction path 432, to conform the ply 210 to the forming surface 160.

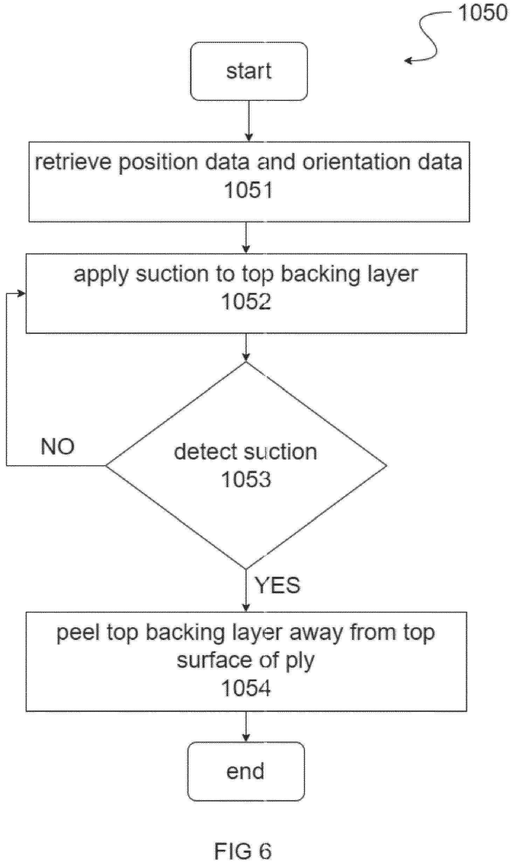

Referring generally to Figs. 1 and 8 and particularly to Fig. 6, which illustrates an example of the step of (block 1050) removing 1050 the top backing layer 232 from the ply 210, according to one or more examples of the method 1000.

Referring to Figs. 6 and 8, in one or more examples, the step of (block 1050) removing the top backing layer 232 from the ply 210 includes a step of (block 1051) retrieving the position data 410 and the orientation data 420 based on the geometry 240 of the ply 210 and the ply sequence number 242 of the ply 210.

Referring to Figs. 6 and 8, in one or more examples, the step of (block 1050) removing the top backing layer 232 from the ply 210 includes a step of (block 1052) applying suction to a corner of the top backing layer 232.

Referring to Figs. 6 and 8, in one or more examples, the step of (block 1050) removing the top backing layer 232 from the ply 210 includes a step of (block 1053) detecting the suction.

Referring to Figs. 6 and 8, in one or more examples, the step of (block 1050) removing the top backing layer 232 from the ply 210 includes a step of (block 1054) peeling 1054 the top backing layer 232 away from the top surface 212 of the ply 210.

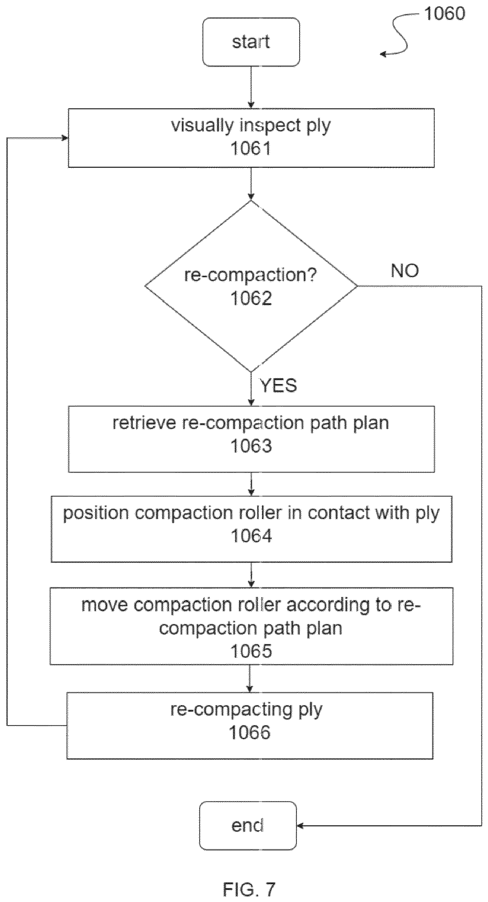

Referring generally to Figs. 1 and 8 and particularly to Fig. 7, which illustrates an example of the step of (block 1060) inspecting 1060 the ply 210 after compacting the ply 210 on the forming surface 160, according to one or more examples of the method 1000.

Referring to Figs. 7 and 8, in one or more examples, the step of (block 1060) inspecting 1060 the ply 210 after compacting the ply 210 on the forming surface 160 includes a step of (block 1061) visually inspecting the ply 210.

In one or more examples, the ply 210 is inspected using the inspecting apparatus 170, such as the at least one vision sensor 172. In these examples, results 440, such as measurement data, image data, images, etc.) from the vision sensor 172 are used to detect nonconformities in the ply 210 after compaction. In one or more examples, the results 440 are transmitted to and processed and/or analyzed by the computer 500 to determine the type and/or characteristic of any nonconformities. Depending on the type and/or characteristic of a detected nonconformity, re-compaction may be necessary. In one or more examples, the vision sensor 172 includes or takes the form of an imaging device or other suitable vision sensor that is configured or operates to scan the ply 210 on the forming surface 160 after compaction and generate data (e.g., results 444) that can be processed to detect nonconformities. As examples, the ply sensor 144 can include or take the form of a camera, a charge coupled device (CCD), a complementary metal oxide semiconductor (CMOS), a laser scanner, a line scanner, a 2D scanner, a 3D scanner, and the like.

Referring to Figs. 7 and 8, in one or more examples, the step of (block 1060) inspecting 1060 the ply 210 after compacting the ply 210 on the forming surface 160 includes a step of (block 1062) determining whether re-compaction is necessary based on the results 440 of visual inspection.

As illustrated in Fig. 7, when the determination is negative (i.e., re-compaction is not needed), the process ends. However, when the determination is affirmative (i.e., re-compaction is needed), the process proceeds to operational steps directed to re-work, including re-compaction and subsequent inspection.

Referring to Figs. 7 and 8, in one or more examples, the step of (block 1060) inspecting 1060 the ply 210 after compacting the ply 210 on the forming surface 160 includes a step of (block 1063) retrieving a re-compaction path plan 450. As an example, the re-compaction path plan 450 is retrieved from the database 510 by the computer 500.

Referring to Figs. 7 and 8, in one or more examples, the step of (block 1060) inspecting 1060 the ply 210 after compacting the ply 210 on the forming surface 160 includes a step of (block 1064) positioning 1064 the compaction roller 150 in contact with the ply 210.

Referring to Figs. 7 and 8, in one or more examples, the step of (block 1060) inspecting 1060 the ply 210 after compacting the ply 210 on the forming surface 160 includes a step of (block 1065) moving the compaction roller 150 across the ply 210 along a re-compaction path 452 according to the re-compaction path plan 450.

Referring to Figs. 7 and 8, in one or more examples, the step of (block 1060) inspecting 1060 the ply 210 after compacting the ply 210 on the forming surface 160 includes a step of (block 1066) re-compacting 1066 the ply 210 on the forming surface 160 when re-compaction is necessary.

Referring again to Fig. 1 and 8, in one or more examples, the method 1000 includes a step of (block 1070) cleaning 1070 the compaction roller 150 used for compacting the ply 210 on the forming surface 160.

The present disclosure recognizes that during compaction of the ply 210 of the ceramic matrix composite material 250, some amount of debris, such as from the ply 210 or other foreign objects, may remain on a compaction-roller surface of the compaction roller 150. The debris can include amounts of the ceramic matrix 254, such as amounts of the ceramic particles 256 and/or the suspension media 258. The debris can also include fragments of the ceramic reinforcement 252. As such, examples of the method 1000 and the system 100 disclosed herein provide techniques and mechanisms for easily and efficiently cleaning the compaction-roller surface of the compaction roller 150 after ply compaction and/or re-compaction.

Referring to Fig. 1, in one or more examples, the method 1000 includes a step of (block 1080) determining whether another one of the plies 200 of the ceramic matrix composite material 250 is to the added for the manufacturing of the ceramic matrix composite structure 260. If the determination is affirmative (i.e., another ceramic matrix composite ply is to be added), the process returns to the step of (block 1010) picking up the ply 210 to process the next one of the plies 200 of the ceramic matrix composite material 250. However, if the determination is negative (i.e., there is no additional ceramic matrix composite ply), the process ends with a step of (block 1090) completing the ceramic matrix composite structure 260 and the process ends.

Referring now to Fig. 8, the following are examples of the system 100 for manufacturing the ceramic matrix composite structure 260, according to the present disclosure. The system 100 includes a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

In one or more examples, the PnP apparatus 110 is configured or operates to pick up the ply 210 of the ceramic matrix composite material 250 at the staging location 310. The PnP apparatus 110 is also configured or operates to place the ply 210 on the forming surface 160 at the forming location 314. The PnP apparatus 110 is further configured or operates to compact the ply 210 on the forming surface 160.

In one or more examples, the peeling apparatus 180 is configured or operates to remove the bottom backing layer 230 from the ply 210 at the backing-removal location 312 before the ply 210 is placed on the forming surface 160. The peeling apparatus 180 is also configured or operates to remove the top backing layer 232 from the ply 210 after the ply 210 is compacted on the forming surface 160.

In one or more examples, the inspecting apparatus 170 is configured or operates to inspect the ply 210 after the ply 210 is compacted on the forming surface 160.

In one or more examples, the system 100 includes the tool 164. The tool 164 includes a tool surface 166. In one or more examples, during the layup process described above by the method 1000, an initial one of the plies 200 of the ceramic matrix composite material 250 is placed and compacted on the tool surface 166. In these examples, the tool surface 166 forms or defines the forming surface 160, at least for the initial one of the plies 200 formed on the tool 164. In one or more examples, during the layup process described above by the method 1000, subsequent or additional ones of the plies 200 of the ceramic matrix composite material 250 are placed and compacted on a prior-ply surface 222 of a prior-ply 220. In these examples, the prior-ply surface 222 forms or defines the forming surface 160, at least for subsequent or additional ones of the plies 200. As such, a shape of the tool 164 or a contour of the tool surface 166 generally defines the shape 162 or the contour 168 of the forming surface 160 upon which the plies 200 are formed (e.g., placed and compacted). The tool 164 can have any suitable geometry or shape. Similarly, the tool surface 166 can have any suitable geometry or profile shape. As examples, the tool surface 166 can have any suitable contour, such as flat (e.g., planar), curved, or a combination of flat portions and curved portions (e.g., simple or complex contours). The method 1000 and the system 100 enable forming (e.g., placing and compacting) of individual ones of the plies 200 of the ceramic matrix composite material 250 (e.g., ply-by-ply) to conform to the shape 162 and/or the contour 168 of the forming surface 160 and, thus, the manufacture of the ceramic matrix composite structure 260.

In one or more examples, the PnP apparatus 110 includes the robot 120 and the end effector 130. The end effector 130 is coupled to the robot 120 and is configured to interact with the ply 210 during one or more of the picking, peeling, placing, compacting, and inspecting operations.

In one or more examples, the PnP apparatus 110 includes a plurality of the grippers 140, at least one ply sensor 144, and at least one grip sensor 142. The grippers 140 are coupled to the end effector 130. Each one of the grippers 140 is configured or operates to grip or otherwise secure and hold the ply 210 during the picking, peeling, and placing operations. The at least one ply sensor 144 is configured or operates to identify the geometry 240 of the ply 210. The at least one grip sensor 142 is configured or operates to detect whether the grippers 140 are coupled to the ply 210.

In one or more examples, the end effector 130 includes a base and at least one arm, such as a plurality of arms. In one or more examples, the grippers 140 are coupled to the base and to each one of the arms. In one or more examples, the arms are coupled to the base and extend outward from the base. As such, the base and the arms generally position the grippers 140 for contact with and gripping of the ply 210. In one or more examples, the arms are movable, for example, linearly movable and/or rotationally movable, relative to the base. As such, movement of the arms relative to the base enables the end effector 130 to selectively or sequentially place different portions of the ply 210 on the forming surface 160 and controllably drape portions of the ply 210 over curved portions of the forming surface 160 and/or radiused edges of the forming surface 160. Additionally, movement of the arms relative to the base enables the end effector 130 to apply tension to the ply 210 during placement and formation on the forming surface 160, thereby preventing the ply 210 from sagging during placement. In one or more examples, the grippers 140 are movable, for example, linearly moveable or rotationally movable, relative to the arms and/or the base. As such, movement of the grippers 140 relative to the base and/or the arms enables the end effector 130 to selectively position the grippers 140 for picking up and placing the ply 210, for example, based on the //240 of the ply 210. In one or more examples, with the ply 210 held by the grippers 140, the robotic 120 moves the ply 210 relative to the forming surface 160 such that a first ply-portion is placed on a first surface-portion of the forming-surface. Further, with the ply 210 held by the grippers 140, an arm can move relative to the base and the forming surface 160 such that a second ply-portion of the ply 210 is draped over a radiused corner of the forming surface 160 between the first surface-portion and the second surface-portion of the forming surface 160 and the second ply-portion of the ply 210 is placed on the second surface-portion of the forming surface 160.

In one or more examples, the PnP apparatus 110 includes the compaction roller 150. The compaction roller 150 is coupled to the end effector 130. The compaction roller 150 is configured or operates to apply a compaction force or compaction pressure to the ply 210 when placed in contact with the ply 210 and moved along the ply 210, for example, by the robot 120.

The present disclosure recognizes the advantages of using a compaction roller having specialized material characteristics to compact the plies 200 of the ceramic matrix composite material 250 in a similar manner to a smoothing process used during manual layup and that addresses the compaction needs for ceramic matrix composite manufacturing. In one or more examples, a material for the compaction roller 150 is selected such that the plies 200 of the ceramic matrix composite material 250 can be compacted using the compaction roller 150 to conform the ply 210 to the shape 162 and/or contour 168 of the forming surface 160 and maintain a desired thickness of the ply 210 while moving the compaction roller 150 across the ply 210 without migration of the ceramic matrix 254 and without undesired deformation (e.g., wrinkling, bubbling, pleating, puckering, bridging, or other deformities) of the fabric weave of the ceramic reinforcement 252 of the ply 210. In one or more examples, the compaction roller 150 includes a compaction-roller axis and a compaction-roller surface that circumscribes the compaction-roller axis. In one or more examples, the compaction roller includes a core and a covering that surrounds the core. In one or more examples, a covering material of the covering includes one of a foam material, a closed-cell foam material, or an inflatable bladder. In one or more examples, the covering material of the covering is impermeable. In one or more examples, the covering material includes at least one of silicone, urethane, polyurethane, and latex. In one or more examples, the covering material of the compaction roller 150 includes a Shore A hardness of between approximately 1 and 10, such as between approximately 3 and 7, such as approximately 5. Advantageously, the compliance of the roller material of the compaction roller 150 provides pressure uniformity without localized high pressure peaks, such that a variation in the compaction pressure along a contact interface between the compaction roller 150 and the ply 210 is less than approximately 5 PSI, such as less than approximately 3 PSI. such as less than approximately 1 PSI. The softness of the roller material allows for smoothing of the ply 210 during rollout compaction without reinforcement distortion or matrix migration, while effectively eliminating large, trapped air bubbles.

In one or more examples, the system 100 includes the computer 500. The computer 500 is adapted to retrieve the position data 410 and the orientation data 420, for example, from the database 510, based on the geometry 240 of the ply 210 and the ply sequence number 242 of the ply 210. The ply 210 is placed (e.g., positioned and oriented) at the forming location 314 relative to the forming surface 160 by the pick and place apparatus 110 based on the position data 410 and orientation data 420, for example, as directed by the computer 500.

In one or more examples, the computer 500 is adapted to retrieve the compaction path plan 430, for example, from the database 510, based on the geometry 240 of the ply 210 and the ply sequence number 242 of the ply 210. The robot 120 is configured or operates to move the compaction roller 150 across the ply 210 along the compaction path 432 according to the compaction path plan 430, for example, as directed by the computer 500.

In one or more examples, the system 100 includes the cleaning apparatus 190. The cleaning apparatus 190 is configured or operates to clean the ceramic matrix 254 (e.g., remnants of the ceramic particles 256 and/or the suspension media 258) from the compaction roller 150. In some cases, the cleaning apparatus 190 is configured or operates to also clean remnants of the ceramic reinforcement 252 and/or other foreign debris from the compaction roller 150.

In one or more examples, the inspecting apparatus 170 includes at least one vision sensor 172. The at least one vision sensor 172 is configured or operates to detect deformations in the ply 210 after the ply 210 is compacted on the forming surface 160.

In one or more examples, the computer 500 is adapted to determine whether re-compaction is necessary based on the results 440 generated by the vision sensor 172. The computer 500 is also adapted to retrieve the re-compaction path plan 450, for example, from the database 510. The robot 120 is configured or operates to move the compaction roller 150 across the ply 210 along the re-compaction path 452 according to the re-compaction path plan 450, for example, as directed by the computer 500.

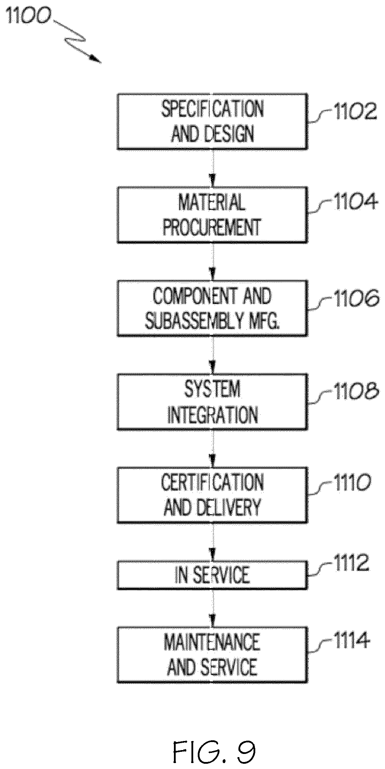

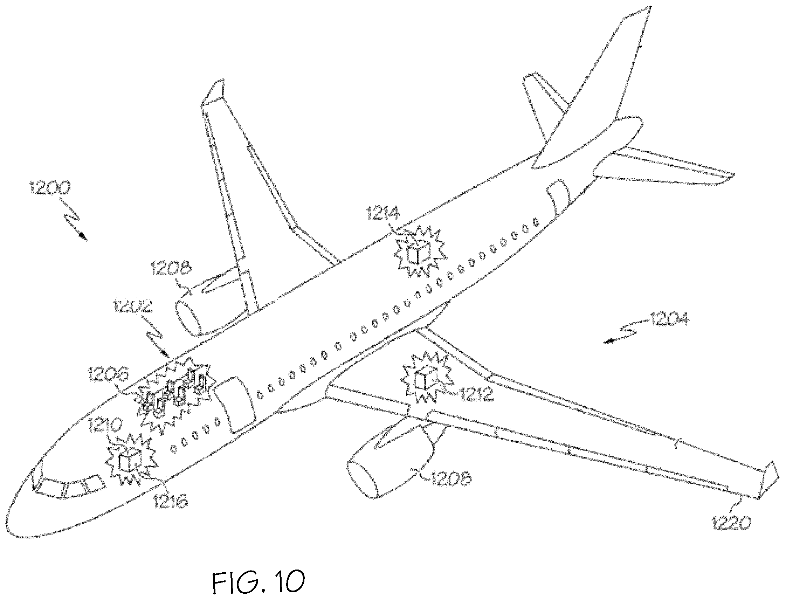

Referring now to Figs. 9 and 10, examples of the method 1000 and the system 100 described herein, may be related to, or used in the context of, the aerospace manufacturing and service method 1100, as shown in the flow diagram of Fig. 9 and an aircraft 1200, as schematically illustrated in Fig. 10. As an example, the aircraft 1200 and/or the manufacturing and service method 1100 may include or utilize components that are manufactured of ceramic matrix composite structures, which are manufacturing using the system 100 and/or according to the method 1000.

Referring to Fig. 10, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems 1216, such as, but not limited to, communications systems, avionics systems, software distribution systems, network communications systems, passenger information/entertainment systems, guidance systems, radar systems, weapons systems, and the like. The aircraft 1200 can have any number of components made of ceramic matrix composite materials, such as ceramic matrix composite structures that are manufactured using system 100 and/or according to the method 1000.

Referring to Fig. 9, during pre-production of the aircraft 1200, the manufacturing and service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the manufacturing and service method 1100 illustrated in Fig. 9 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the method 1000 and the system 100, shown and described herein, may be employed during any one or more of the stages of the manufacturing and service method 1100 shown in the flow diagram illustrated by Fig. 9. In an example, components of the aircraft 1200 can be manufactured of ceramic matrix composite materials, which are manufactured using the system 100 and/or according to the method 1000 during a portion of component and subassembly manufacturing (block 1106) and/or system integration (block 1108). Further, components of the aircraft 1200 can be manufactured of ceramic matrix composite materials, which are manufactured using the system 100 and/or according to the method 1000 while the aircraft 1200 is in service (block 1112). Also, components of the aircraft 1200 can be manufactured of ceramic matrix composite materials, which are manufactured using the system 100 and/or according to the method 1000 during system integration (block 1108) and certification and delivery (block 1110). Similarly, components of the aircraft 1200 can be manufactured of ceramic matrix composite materials, which are manufactured using the system 100 and/or according to the method 1000 while the aircraft 1200 is in service (block 1112) and during maintenance and service (block 1114).

A method (1000) for manufacturing a ceramic matrix composite structure (260) according to an embodiment of the present application (see figures 1-7) comprises several steps that include picking (1010) up a ply (210) of a ceramic matrix composite material (250) at a staging location (310), removing (1020) a bottom backing layer (230) from the ply (210) at a backing-removal location (312), placing (1030) the ply (210) on a forming surface (160) at a forming location (314) after removing the bottom backing layer (230), compacting (1040) the ply (210) on the forming surface (160), removing (1050) a top backing layer (232) from the ply (210) after compacting the ply (210) on the forming surface (160), and inspecting (1060) the ply (210) after compacting the ply (210) on the forming surface (160). Preferably, picking (1010) up the ply (210) comprises staging (1011) the ply (210) at the staging location (310), moving (1012) an end effector (130) to the staging location (310), identifying (1013) a geometry (240) of the ply (210), positioning (1014) grippers (140) of the end effector (130) based on the geometry (240) of the ply (210), moving (1015) the end effector (130) to place the grippers (140) in contact with the ply (210). In such method, with the grippers (140) in contact with the ply (210), grippers (140) are capable of gripping (1016) the ply (210). Such method further preferably involves detecting (1017) whether the ply (210) is coupled to the grippers (140).

In such method (1000) removing (1020) the bottom backing layer (230) from the ply (210) preferably comprises positioning (1021) the ply (210) at the backing-removal location (312) for removal of the bottom backing layer (230), applying (1022) suction to the bottom backing layer (230), detecting (1023) the suction, and peeling (1024) the bottom backing layer (230) away from a bottom surface (214) of the ply (210). Placing (1030) the ply (210) on the forming surface (160) optionally comprises retrieving (1031) position data (410) and orientation data (420) based on a geometry (240) of the ply (210) and a ply sequence number (242) of the ply (210), positioning (1032) the ply (210) at the forming location (314) relative to the forming surface (160) based on the position data (410) and the orientation data (420), and conforming (1033) the ply (210) to a shape (162) of the forming surface (160).

Compacting (1040) the ply (210) on the forming surface (160) preferably involves retrieving (1041) a compaction path plan (430) based on a geometry (240) of the ply (210) and a ply sequence number (242) of the ply (210), positioning (1042) a compaction roller (150) in contact with the ply (210), and moving (1043) the compaction roller (150) across the ply (210) along a compaction path (432) according to the compaction path plan (430). Preferably, there is applied a cleaning (1070) step of the compaction roller (150) that is used for compacting the ply (210) on the forming surface (160).

Optionally, some of the steps of the method involve further sub-steps. For example, removing (1050) the top backing layer (232) from the ply (210) comprises retrieving (1051) position data (410) and orientation data (420) based on a geometry (240) of the ply (210) and a ply sequence number (242) of the ply (210), applying (1052) suction to a corner of the top backing layer (232), detecting (1053) the suction, and peeling (1054) the top backing layer (232) away from a top surface (212) of the ply (210). In addition or alternatively, inspecting (1060) the ply (210) after compacting the ply (210) on the forming surface (160) may comprises visually inspecting (1061) the ply (210), determining (1062) whether re-compaction is necessary based on results (440) of visual inspection, and re-compacting (1066) the ply (210) on the forming surface (160) when re-compaction is necessary. This inspecting (1060) the ply (210) after compacting the ply (210) on the forming surface (160) may optionally further involve retrieving (1063) a re-compaction path plan (450), positioning (1064) a compaction roller (150) in contact with the ply (210), and moving (1065) the compaction roller (150) across the ply (210) along a re-compaction path (452) according to the re-compaction path plan (450).

The ceramic matrix composite structure (260) preferably comprises a portion of an aircraft (1200). This is schematically illustrated in figure 10.

A system (100) for manufacturing a ceramic matrix composite structure (260) according to an embodiment of the present application (see figure 8) comprises a pick and place apparatus (110) that is configured to pick up a ply (210) of a ceramic matrix composite material (250) at a staging location (310), place the ply (210) on a forming surface (160) at a forming location (314), and compact the ply (210) on the forming surface (160). System (100) further comprises a peeling apparatus (180) that is configured to remove a bottom backing layer (230) from the ply (210) at a backing-removal location (312) before the ply (210) is placed on the forming surface (160), and remove a top backing layer (232) from the ply (210) after the ply (210) is compacted on the forming surface (160). System (100) further comprises an inspecting apparatus (170) configured to inspect the ply (210) after the ply (210) is compacted on the forming surface (160).

In an illustrated embodiment of system (100), the pick and place apparatus (110) comprises a robot (120), and an end effector (130) coupled to the robot (120) and configured to interact with the ply (210). Such pick and place apparatus (110) further preferably comprises a plurality of grippers (140) coupled to the end effector (130), at least one ply sensor (144) configured to identify a geometry (240) of the ply (210), and at least one grip sensor (142) configured to detect whether the grippers (140) are coupled to the ply (210). Optionally, the pick and place apparatus (110) further comprises a compaction roller (150) coupled to the end effector (130).

Such system (100) preferably involves a computer (500) adapted to retrieve a compaction path plan (430) based on a geometry (240) of the ply (210) and a ply sequence number (242) of the ply (210). Preferably, the robot (120) is configured to move the compaction roller (150) across the ply (210) along a compaction path (432) according to the compaction path plan (430).

System (100) may further comprise a cleaning apparatus (190) configured to clean a ceramic matrix (254) from the compaction roller (150).

Furthermore, as a further option, system (100) may further comprise a computer (500) adapted to retrieve position data (410) and orientation data (420) based on a geometry (240) of the ply (210) and a ply sequence number (242) of the ply (210). With such computer (500) the pick and place apparatus (110) is preferably configured to place the ply (210) at the forming location (314) relative to the forming surface (160) based on the position data (410) and orientation data (420).

Preferably, the inspecting apparatus (170) of system (100) comprises at least one vision sensor (172) configured to detect deformations in the ply (210) after the ply (210) is compacted on the forming surface (160). In such system (100), preferably a computer (500) is provided that is adapted to determine whether re-compaction is necessary based on results (440) generated by the vision sensor (172), and retrieve a re-compaction path plan (450). The robot (120) is then preferably configured to move the compaction roller (150) across the ply (210) along a re-compaction path (452) according to the re-compaction path plan (450).The preceding detailed description refers to the accompanying drawings, which illustrate specific examples described by the present disclosure.

Although various examples of the system 100 and the method 1000 have been shown and described, modifications may occur to those skilled in the art upon reading the specification. The present application includes such modifications and is limited only by the scope of the claims.

## Claims

1. A method (1000) for manufacturing a ceramic matrix composite structure (260), the method (1000) comprising:
picking (1010) up a ply (210) of a ceramic matrix composite material (250) at a staging location (310);
removing (1020) a bottom backing layer (230) from the ply (210) at a backing-removal location (312);
placing (1030) the ply (210) on a forming surface (160) at a forming location (314) after removing the bottom backing layer (230);
compacting (1040) the ply (210) on the forming surface (160);
removing (1050) a top backing layer (232) from the ply (210) after compacting the ply (210) on the forming surface (160); and
inspecting (1060) the ply (210) after compacting the ply (210) on the forming surface (160).

2. The method (1000) of claim 1, wherein picking (1010) up the ply (210) comprises:
staging (1011) the ply (210) at the staging location (310);
moving (1012) an end effector (130) to the staging location (310);
identifying (1013) a geometry (240) of the ply (210);
positioning (1014) grippers (140) of the end effector (130) based on the geometry (240) of the ply (210);
moving (1015) the end effector (130) to place the grippers (140) in contact with the ply (210);
with the grippers (140) in contact with the ply (210), gripping (1016) the ply (210) with the grippers (140); and
detecting (1017) whether the ply (210) is coupled to the grippers (140).

3. The method (1000) of claim 1 or 2, wherein removing (1020) the bottom backing layer (230) from the ply (210) comprises:
positioning (1021) the ply (210) at the backing-removal location (312) for removal of the bottom backing layer (230);
applying (1022) suction to the bottom backing layer (230);
detecting (1023) the suction; and
peeling (1024) the bottom backing layer (230) away from a bottom surface (214) of the ply (210).

4. The method (1000) of claim 1, 2 or 3, wherein placing (1030) the ply (210) on the forming surface (160) comprises:
retrieving (1031) position data (410) and orientation data (420) based on a geometry (240) of the ply (210) and a ply sequence number (242) of the ply (210);
positioning (1032) the ply (210) at the forming location (314) relative to the forming surface (160) based on the position data (410) and the orientation data (420); and
conforming (1033) the ply (210) to a shape (162) of the forming surface (160).

5. The method (1000) of any of the preceding claims, wherein compacting (1040) the ply (210) on the forming surface (160) comprises:
retrieving (1041) a compaction path plan (430) based on a geometry (240) of the ply (210) and a ply sequence number (242) of the ply (210);
positioning (1042) a compaction roller (150) in contact with the ply (210); and
moving (1043) the compaction roller (150) across the ply (210) along a compaction path (432) according to the compaction path plan (430),
further preferably comprising cleaning (1070) the compaction roller (150) used for compacting the ply (210) on the forming surface (160).

6. The method (1000) of any of the preceding claims, wherein removing (1050) the top backing layer (232) from the ply (210) comprises:
retrieving (1051) position data (410) and orientation data (420) based on a geometry (240) of the ply (210) and a ply sequence number (242) of the ply (210);
applying (1052) suction to a corner of the top backing layer (232);
detecting (1053) the suction; and
peeling (1054) the top backing layer (232) away from a top surface (212) of the ply (210).

7. The method (1000) of any of the preceding claims, wherein inspecting (1060) the ply (210) after compacting the ply (210) on the forming surface (160) comprises:
visually inspecting (1061) the ply (210);
determining (1062) whether re-compaction is necessary based on results (440) of visual inspection; and
re-compacting (1066) the ply (210) on the forming surface (160) when re-compaction is necessary,
wherein inspecting (1060) the ply (210) after compacting the ply (210) on the forming surface (160) further preferably comprises:
retrieving (1063) a re-compaction path plan (450);
positioning (1064) a compaction roller (150) in contact with the ply (210); and
moving (1065) the compaction roller (150) across the ply (210) along a re-compaction path (452) according to the re-compaction path plan (450).

8. The method of any of the preceding claims, wherein the ceramic matrix composite structure (260) comprises a portion of an aircraft (1200).

9. A system (100) for manufacturing a ceramic matrix composite structure (260), the system (100) comprising:
a pick and place apparatus (110) configured to:
pick up a ply (210) of a ceramic matrix composite material (250) at a staging location (310);
place the ply (210) on a forming surface (160) at a forming location (314); and
compact the ply (210) on the forming surface (160);
a peeling apparatus (180) configured to:
remove a bottom backing layer (230) from the ply (210) at a backing-removal location (312) before the ply (210) is placed on the forming surface (160); and
remove a top backing layer (232) from the ply (210) after the ply (210) is compacted on the forming surface (160); and
an inspecting apparatus (170) configured to inspect the ply (210) after the ply (210) is compacted on the forming surface (160).

10. The system (100) of claim 9, wherein the pick and place apparatus (110) comprises:
a robot (120); and
an end effector (130) coupled to the robot (120) and configured to interact with the ply (210).

11. The system (100) of claim 10, wherein the pick and place apparatus (110) further comprises:
a plurality of grippers (140) coupled to the end effector (130);
at least one ply sensor (144) configured to identify a geometry (240) of the ply (210); and
at least one grip sensor (142) configured to detect whether the grippers (140) are coupled to the ply (210).

12. The system (100) of claim 10 or 11, wherein the pick and place apparatus (110) further comprises a compaction roller (150) coupled to the end effector (130)
further preferably comprising a computer (500) adapted to retrieve a compaction path plan (430) based on a geometry (240) of the ply (210) and a ply sequence number (242) of the ply (210),
wherein the robot (120) is configured to move the compaction roller (150) across the ply (210) along a compaction path (432) according to the compaction path plan (430).

13. The system (100) of claim 12, further comprising a cleaning apparatus (190) configured to clean a ceramic matrix (254) from the compaction roller (150).

14. The system (100) of any of the preceding claims 9-13, further comprising a computer (500) adapted to retrieve position data (410) and orientation data (420) based on a geometry (240) of the ply (210) and a ply sequence number (242) of the ply (210),
wherein the pick and place apparatus (110) is configured to place the ply (210) at the forming location (314) relative to the forming surface (160) based on the position data (410) and orientation data (420).

15. The system (100) of any of the preceding claims 9-14, wherein the inspecting apparatus (170) comprises at least one vision sensor (172) configured to detect deformations in the ply (210) after the ply (210) is compacted on the forming surface (160),
further preferably comprising a computer (500) adapted to:
determine whether re-compaction is necessary based on results (440) generated by the vision sensor (172); and
retrieve a re-compaction path plan (450),
wherein the robot (120) is configured to move the compaction roller (150) across the ply (210) along a re-compaction path (452) according to the re-compaction path plan (450).

## Patentansprüche

1. Verfahren (1000) zum Herstellen einer Keramikmatrixverbundstruktur (260), das Verfahren (1000) umfassend:
Aufnehmen (1010) einer Lage (210) eines Keramikmatrixverbundwerkstoffs (250) an einer Bereitstellungsstelle (310);
Entfernen (1020) einer unteren Trägerschicht (230) von der Lage (210) an einer Trägerentfernungsstelle (312);
Platzieren (1030) der Lage (210) auf einer Formungsoberfläche (160) an einer Formungsstelle (314) nach dem Entfernen der unteren Trägerschicht (230);
Verdichten (1040) der Lage (210) auf der Formungsoberfläche (160);
Entfernen (1050) einer oberen Trägerschicht (232) von der Lage (210) nach dem Verdichten der Lage (210) auf der Formungsoberfläche (160); und
Prüfen (1060) der Lage (210) nach dem Verdichten der Lage (210) auf der Formungsoberfläche (160).

2. Verfahren (1000) nach Anspruch 1, wobei das Aufnehmen (1010) der Lage (210) umfasst:
Positionieren (1011) der Lage (210) an der Bereitstellungsstelle (310);
Bewegen (1012) eines Endeffektors (130) zu der Bereitstellungsstelle (310);
Identifizieren (1013) einer Geometrie (240) der Lage (210);
Positionieren (1014) von Greifern (140) des Endeffektors (130) basierend auf der Geometrie (240) der Lage (210);
Bewegen (1015) des Endeffektors (130), um die Greifer (140) in Kontakt mit der Lage (210) zu platzieren;
wobei die Greifer (140) in Kontakt mit der Lage (210) stehen, Greifen (1016) der Lage (210) mit den Greifern (140); und
Erfassen (1017), ob die Lage (210) an die Greifer (140) gekoppelt ist.

3. Verfahren (1000) nach Anspruch 1 oder 2, wobei das Entfernen (1020) der unteren Trägerschicht (230) von der Lage (210) umfasst:
Positionieren (1021) der Lage (210) an der Trägerentfernungsstelle (312) für die Entfernung der unteren Trägerschicht (230);
Anlegen (1022) von Sog an die untere Trägerschicht (230);
Erfassen (1023) der Saugwirkung; und
Abziehen (1024) der unteren Trägerschicht (230) weg von einer unteren Oberfläche (214) der Lage (210).

4. Verfahren (1000) nach Anspruch 1, 2 oder 3, wobei das Platzieren (1030) der Lage (210) auf der Formungsoberfläche (160) umfasst:
Abrufen (1031) von Positionsdaten (410) und Ausrichtungsdaten (420) basierend auf einer Geometrie (240) der Lage (210) und einer Lagensequenznummer (242) der Lage (210);
Positionieren (1032) der Lage (210) an der Formungsstelle (314) relativ zu der Formungsoberfläche (160) basierend auf den Positionsdaten (410) und den Ausrichtungsdaten (420); und
Angleichen (1033) der Lage (210) an eine Form (162) der Formungsoberfläche (160).

5. Verfahren (1000) nach einem der vorstehenden Ansprüche, wobei das Verdichten (1040) der Lage (210) auf der Formungsoberfläche (160) umfasst:
Abrufen (1041) eines Verdichtungspfadplans (430) basierend auf einer Geometrie (240) der Lage (210) und einer Lagensequenznummer (242) der Lage (210);
Positionieren (1042) einer Verdichtungswalze (150) in Kontakt mit der Lage (210); und
Bewegen (1043) der Verdichtungswalze (150) über die Lage (210) hinweg entlang eines Verdichtungspfads (432) gemäß dem Verdichtungspfadplan (430),
ferner vorzugsweise umfassend ein Reinigen (1070) der Verdichtungswalze (150), die zum Verdichten der Lage (210) auf der Formungsoberfläche (160) verwendet wird.

6. Verfahren (1000) nach einem der vorstehenden Ansprüche, wobei das Entfernen (1050) der oberen Trägerschicht (232) von der Lage (210) umfasst:
Abrufen (1051) von Positionsdaten (410) und Ausrichtungsdaten (420) basierend auf einer Geometrie (240) der Lage (210) und einer Lagensequenznummer (242) der Lage (210);
Anlegen (1052) von Sog an eine Ecke der oberen Trägerschicht (232);
Erfassen (1053) der Saugwirkung; und
Abziehen (1054) der oberen Trägerschicht (232) von einer oberen Oberfläche (212) der Lage (210).

7. Verfahren (1000) nach einem der vorstehenden Ansprüche, wobei das Prüfen (1060) der Lage (210) nach dem Verdichten der Lage (210) auf der Formungsoberfläche (160) umfasst:
visuelles Prüfen (1061) der Lage (210);
Bestimmen (1062), ob eine erneute Verdichtung basierend auf Ergebnissen (440) einer Sichtprüfung erforderlich ist; und
Erneutes Verdichten (1066) der Lage (210) auf der Formungsoberfläche (160), wenn eine erneute Verdichtung erforderlich ist,
wobei das Prüfen (1060) der Lage (210) nach dem Verdichten der Lage (210) auf der Formungsoberfläche (160) ferner vorzugsweise umfasst:
Abrufen (1063) eines Pfadplans (450) für die erneute Verdichtung;
Positionieren (1064) einer Verdichtungswalze (150) in Kontakt mit der Lage (210); und
Bewegen (1065) der Verdichtungswalze (150) über die Lage (210) hinweg entlang eines Pfads (452) für die erneute Verdichtung gemäß dem Pfadplan (450) für die erneute Verdichtung.

8. Verfahren nach einem der vorstehenden Ansprüche, wobei die Keramikmatrixverbundstruktur (260) einen Abschnitt eines Luftfahrzeugs (1200) umfasst.

9. System (100) zum Herstellen einer Keramikmatrixverbundstruktur (260), das System (100) umfassend:
eine Bestückungsvorrichtung (110), die konfiguriert ist zum:
Aufnehmen einer Lage (210) eines Keramikmatrixverbundwerkstoffs (250) an einer Bereitstellungsstelle (310);
Platzieren der Lage (210) auf eine Formungsoberfläche (160) an einer Formungsstelle (314); und
Verdichten der Lage (210) auf der Formungsoberfläche (160);
eine Abziehvorrichtung (180), die konfiguriert ist zum:
Entfernen einer unteren Trägerschicht (230) von der Lage (210) an einer Trägerentfernungsstelle (312), bevor die Lage (210) auf die Formungsoberfläche (160) platziert wird; und
Entfernen einer oberen Trägerschicht (232) von der Lage (210), nachdem die Lage (210) auf der Formungsoberfläche (160) verdichtet ist; und
eine Prüfvorrichtung (170), die konfiguriert ist, um die Lage (210) zu prüfen, nachdem die Lage (210) auf der Formungsoberfläche (160) verdichtet ist.

10. System (100) nach Anspruch 9, wobei die Bestückungsvorrichtung (110) umfasst:
einen Roboter (120); und
einen Endeffektor (130), der an den Roboter (120) gekoppelt ist und konfiguriert ist, um mit der Lage (210) zusammenzuwirken.

11. System (100) nach Anspruch 10, wobei die Bestückungsvorrichtung (110) ferner umfasst:
eine Vielzahl von Greifern (140), die an den Endeffektor (130) gekoppelt sind;
mindestens einen Lagensensor (144), der konfiguriert ist, um eine Geometrie (240) der Lage (210) zu identifizieren; und
mindestens einen Greifsensor (142), der konfiguriert ist, um zu erfassen, ob die Greifer (140) an die Lage (210) gekoppelt sind.

12. System (100) nach Anspruch 10 oder 11, wobei die Bestückungsvorrichtung (110) ferner eine Verdichtungswalze (150) umfasst, die an den Endeffektor (130) gekoppelt ist,
ferner vorzugsweise umfassend einen Computer (500), der angepasst ist, um einen Verdichtungsbahnplan (430) basierend auf einer Geometrie (240) der Lage (210) und einer Lagensequenznummer (242) der Lage (210) abzurufen,
wobei der Roboter (120) konfiguriert ist, um die Verdichtungswalze (150) über die Lage (210) hinweg entlang eines Verdichtungspfads (432) gemäß dem Verdichtungspfadplan (430) zu bewegen.

13. System (100) nach Anspruch 12, ferner umfassend eine Reinigungsvorrichtung (190), die konfiguriert ist, um eine Keramikmatrix (254) von der Verdichtungswalze (150) zu reinigen.

14. System (100) nach einem der vorstehenden Ansprüche 9 bis 13, ferner umfassend einen Computer (500), der angepasst ist, um Positionsdaten (410) und Ausrichtungsdaten (420) basierend auf einer Geometrie (240) der Lage (210) und einer Lagensequenznummer (242) der Lage (210) abzurufen,
wobei die Bestückungsvorrichtung (110) konfiguriert ist, um die Lage (210) an dem Formungsort (314) relativ zu der Formungsoberfläche (160) basierend auf den Positionsdaten (410) und Ausrichtungsdaten (420) zu platzieren.

15. System (100) nach einem der vorstehenden Ansprüche 9 bis 14, wobei die Prüfvorrichtung (170) mindestens einen Sichtsensor (172) umfasst, der konfiguriert ist, um Verformungen in der Lage (210) zu erfassen, nachdem die Lage (210) auf der Formungsoberfläche (160) verdichtet ist,
ferner vorzugsweise umfassend einen Computer (500), der angepasst ist zum:
Bestimmen, ob eine erneute Verdichtung basierend auf Ergebnissen (440), die durch den Sichtsensor (172) generiert werden, erforderlich ist; und
Abrufen eines Pfadplans (450) für die erneute Verdichtung,
wobei der Roboter (120) konfiguriert ist, um die Verdichtungswalze (150) über die Lage (210) hinweg entlang eines Pfads (452) für die erneute Verdichtung gemäß dem Pfadplan (450) für die erneute Verdichtung zu bewegen.

## Revendications

1. Procédé (1000) de fabrication d'une structure composite à matrice céramique (260), le procédé (1000) comprenant :
le prélèvement (1010) d'une nappe (210) d'un matériau composite à matrice céramique (250) au niveau d'un emplacement de stockage (310) ;
le retrait (1020) d'une couche de support inférieure (230) de la nappe (210) au niveau d'un emplacement de retrait de support (312) ;
le placement (1030) de la nappe (210) sur une surface de formation (160) au niveau d'un emplacement de formation (314) après retrait de la couche de support inférieure (230) ;
le compactage (1040) de la nappe (210) sur la surface de formation (160) ;
le retrait (1050) d'une couche de support supérieure (232) de la nappe (210) après compactage de la nappe (210) sur la surface de formation (160) ; et
l'inspection (1060) de la nappe (210) après compactage de la nappe (210) sur la surface de formation (160).

2. Procédé (1000) selon la revendication 1, dans lequel le prélèvement (1010) de la nappe (210) comprend :
le stockage (1011) de la nappe (210) au niveau de l'emplacement de stockage (310) ;
le déplacement (1012) d'un effecteur terminal (130) vers l'emplacement de stockage (310) ;
l'identification (1013) d'une géométrie (240) de la nappe (210) ;
le positionnement (1014) de pinces (140) de l'effecteur terminal (130) en fonction de la géométrie (240) de la nappe (210) ;
le déplacement (1015) de l'effecteur terminal (130) pour placer les pinces (140) en contact avec la nappe (210) ;
les pinces (140) étant en contact avec la nappe (210), la saisie (1016) de la nappe (210) avec les pinces (140) ; et
la détection (1017) établissant si la nappe (210) est accouplée aux pinces (140).

3. Procédé (1000) selon la revendication 1 ou 2, dans lequel le retrait (1020) de la couche de support inférieure (230) de la nappe (210) comprend :
le positionnement (1021) de la nappe (210) au niveau de l'emplacement de retrait de support (312) pour retirer la couche de support inférieure (230) ;
l'application (1022) d'une aspiration à la couche de support inférieure (230) ;
la détection (1023) de l'aspiration ; et
le décollement (1024) de la couche de support inférieure (230) de la surface inférieure (214) de la nappe (210).

4. Procédé (1000) selon la revendication 1, 2 ou 3, dans lequel le placement (1030) de la nappe (210) sur la surface de formation (160) comprend :
la récupération (1031) de données de position (410) et de données d'orientation (420) en fonction d'une géométrie (240) de la nappe (210) et d'un numéro de séquence de nappe (242) de la nappe (210) ;
le positionnement (1032) de la nappe (210) au niveau de l'emplacement de formation (314) par rapport à la surface de formation (160) en fonction des données de position (410) et des données d'orientation (420) ; et
la conformation (1033) de la nappe (210) à une forme (162) de la surface de formation (160).

5. Procédé (1000) selon l'une quelconque des revendications précédentes, dans lequel le compactage (1040) de la nappe (210) sur la surface de formation (160) comprend :
la récupération (1041) d'un plan de chemin de compactage (430) en fonction d'une géométrie (240) de la nappe (210) et d'un numéro de séquence de nappe (242) de la nappe (210) ;
le positionnement (1042) d'un rouleau de compactage (150) en contact avec la nappe (210) ; et
le déplacement (1043) du rouleau de compactage (150) d'un bout à l'autre de la nappe (210) le long d'un chemin de compactage (432) selon le plan de chemin de compactage (430),
en outre de préférence comprenant le nettoyage (1070) du rouleau de compactage (150) utilisé pour compacter la nappe (210) sur la surface de formation (160).

6. Procédé (1000) selon l'une quelconque des revendications précédentes, dans lequel le retrait (1050) de la couche de support supérieure (232) de la nappe (210) comprend :
la récupération (1051) de données de position (410) et de données d'orientation (420) en fonction d'une géométrie (240) de la nappe (210) et d'un numéro de séquence de nappe (242) de la nappe (210) ;
l'application (1052) d'une aspiration à un coin de la couche de support supérieure (232) ;
la détection (1053) de l'aspiration ; et
le décollement (1054) de la couche de support supérieure (232) de la surface supérieure (212) de la nappe (210).

7. Procédé (1000) selon l'une quelconque des revendications précédentes, dans lequel l'inspection (1060) de la nappe (210) après compactage de la nappe (210) sur la surface de formation (160) comprend :
l'inspection visuelle (1061) de la nappe (210) ;
la détermination (1062) établissant si un nouveau compactage est nécessaire en fonction de résultats (440) de l'inspection visuelle ; et
le nouveau compactage (1066) de la nappe (210) sur la surface de formation (160) lorsqu'un nouveau compactage est nécessaire,
dans lequel l'inspection (1060) de la nappe (210) après compactage de la nappe (210) sur la surface de formation (160) comprend en outre de préférence :
la récupération (1063) d'un plan de chemin de nouveau compactage (450) ;
le positionnement (1064) d'un rouleau de compactage (150) en contact avec la nappe (210) ; et
le déplacement (1065) du rouleau de compactage (150) d'un bout à l'autre de la nappe (210) le long d'un chemin de nouveau compactage (452) selon le plan de chemin de nouveau compactage (450).

8. Procédé selon l'une quelconque des revendications précédentes, dans lequel la structure composite à matrice céramique (260) comprend une partie d'un aéronef (1200).

9. Système (100) de fabrication d'une structure composite à matrice céramique (260), le système (100) comprenant :
un appareil de prélèvement et de mise en place (110) configuré pour :
prélever une nappe (210) d'un matériau composite à matrice céramique (250) au niveau d'un emplacement de stockage (310) ;
placer la nappe (210) sur une surface de formation (160) au niveau d'un emplacement de formation (314) ; et
compacter la nappe (210) sur la surface de formation (160) ;
un appareil de décollement (180) configuré pour :
retirer une couche de support inférieure (230) de la nappe (210) au niveau d'un emplacement de retrait de support (312) avant le placement la nappe (210) sur la surface de formation (160) ; et
retirer une couche de support supérieure (232) de la nappe (210) après compactage de la nappe (210) sur la surface de formation (160) ; et
un appareil d'inspection (170) configuré pour inspecter la nappe (210) après compactage de la nappe (210) sur la surface de formation (160).

10. Système (100) selon la revendication 9, dans lequel l'appareil de prélèvement et placement (110) comprend :
un robot (120) ; et
un effecteur terminal (130) accouplé au robot (120) et configuré pour interagir avec la nappe (210).

11. Système (100) selon la revendication 10, dans lequel l'appareil de prélèvement et placement (110) comprend en outre :
une pluralité de pinces (140) accouplées à l'effecteur terminal (130) ;
au moins un capteur de nappe (144) configuré pour identifier une géométrie (240) de la nappe (210) ; et
au moins un capteur de préhension (142) configuré pour détecter si les pinces (140) sont accouplées à la nappe (210).

12. Système (100) selon la revendication 10 ou 11, dans lequel l'appareil de prélèvement et placement (110) comprend en outre un rouleau de compactage (150) accouplé à l'effecteur terminal (130) en outre comprenant de préférence un ordinateur (500) conçu pour récupérer un chemin de plan de compactage (430) en fonction d'une géométrie (240) de la nappe (210) et d'un numéro de séquence de nappe (242) de la nappe (210),
dans lequel le robot (120) est configuré pour déplacer le rouleau de compactage (150) d'un bout à l'autre de la nappe (210) le long d'un chemin de compactage (432) selon le plan de chemin de compactage (430).

13. Système (100) selon la revendication 12, comprenant en outre un appareil de nettoyage (190) configuré pour nettoyer une matrice céramique (254) à partir du rouleau de compactage (150).

14. Système (100) selon l'une des revendications 9 à 13 précédentes, comprenant en outre un ordinateur (500) conçu pour récupérer des données de position (410) et des données d'orientation (420) en fonction d'une géométrie (240) de la nappe (210) et d'un numéro de séquence de nappe (242) de la nappe (210),
dans lequel l'appareil de prélèvement et placement (110) est configuré pour placer la nappe (210) au niveau de l'emplacement de formation (314) par rapport à la surface de formation (160) en fonction des données de position (410) et des données d'orientation (420).

15. Système (100) selon l'une quelconque des revendications 9 à 14 précédentes, dans lequel l'appareil d'inspection (170) comprend au moins un capteur de vision (172) configuré pour détecter des déformations dans la nappe (210) après le compactage de la nappe (210) sur la surface de formation (160),
en outre comprenant de préférence un ordinateur (500) conçu pour :
déterminer si un nouveau compactage est nécessaire en fonction de résultats (440) générés par le capteur de vision (172) ; et
récupérer un plan de chemin de nouveau compactage (450),
dans lequel le robot (120) est configuré pour déplacer le rouleau de compactage (150) d'un bout à l'autre de la nappe (210) le long d'un chemin de nouveau compactage (452) selon le plan de chemin de nouveau compactage (450).
